Europäisches Patentamt

**European Patent Office**

**Office européen des brevets**

(11) Numéro de publication: **0 021 972**
**A1**

(12)

# DEMANDE DE BREVET EUROPEEN

(21) Numéro de dépôt: **80400873.8**

(22) Date de dépôt: **16.06.80**

(51) Int. Cl.³: **B 23 P 19/00**
**//B25J9/00**

(30) Priorité: **15.06.79 FR 7915352**

(43) Date de publication de la demande:
**07.01.81 Bulletin 81/1.**

(84) Etats Contractants Désignés:
**AT BE CH DE GB IT LI LU NL SE**

(71) Demandeur: **SORMEL Société anonyme dite:**
**Rue Becquerel Z.I. de Chateaufarine**
**F-25009 Besançon(FR)**

(72) Inventeur: **Petiteau, Maurice René**
**7, rue Sancey**
**F-25000 Besancon(FR)**

(74) Mandataire: **Bonnetat, Christian**
**PROPI Conseils 23 rue de Léningrad**
**F-75008 Paris(FR)**

(54) **Automate de manipulation précise à cadence élevée.**

(57) Automate rapide et précis pour le déplacement alternatif
d'un organe actif (20) entre, d'une part, une position quelconque (2') choisie parmi une pluralité de positions possibles (2)
d'une première zone (1), et, d'autre part, une position quelconque (4') choisie parmi une pluralité de position possibles
(4) d'une seconde zone (3), distance de la première.

L'automate comporte des moyens de déplacement à
course fixe (11,12) entre un point déterminé (5) de l'une desdites zones et un point déterminé (6) de l'autre desdites zones,
ainsi que des moyens de déplacement précis (17, 19), associés
aux moyens de déplacement à course fixe (11,12) et asservis
en position.

Fig.3

EP 0 021 972 A1

Automate de manipulation précise à cadence élevée.

La présente invention concerne un automate de mani- pulacion précise à cadence élevée, par exemple destiné à manipuler des pièces ou des outillages. De tels automates trouvent actuellement une utilisation de plus en plus étendue dans les domaines de l'assemblage et de l'usinage, par exemple dans la réalisation de chaînes d'assemblage automatique en petite mécanique. Dans ce dernier cas notamment, de tels automates fonctionnent selon une séquence rigide de fonctions de prise de pièce, de déplacement, de dépose, de vissage, de rivetage, de collage, etc...

On connaît déjà des automates de ce type, ayant une course fixe ou programmable, mais, généralement, dans ces automates connus, la précision finale de positionnement est obtenue au détriment de la cadence, du fait qu'il est difficile de disposer d'un système ayant une vitesse élevée, une grande course et une bonne précision. De plus, chaque automate connu de ce type est limité rigidement au montage ou à l'usinage en grande série d'un produit complexe unique. Il est donc impossible économiquement d'utiliser un tel automate pour des petites ou moyennes séries, qui représentent pourtant la plus grande partie de la production industrielle.

La présente invention a pour objet de remédier à ces inconvénients. Elle concerne un automate permettant des déplacements rapides et de grande course, avec une précision très élevée. De plus, l'automate selon l'invention est aisément reconfigurable pour passer d'un type de produit à un autre, par simple modification des dispositifs de distribution des composants et changement des accessoires de travail et son système de

0021972

-2-

commande est très souple pour permettre de passer, par programmation, d'un modèle de produit à un autre à l'intérieur d'une même famille de produits.

Ainsi, quoique non exclusivement, l'automate est particulièrement approprié au montage automatique de petits mécanismes, puisque un tel montage nécessite, d'une part, des temps de cycles très faibles, pour la rentabilisation des équipements, à cause du faible prix unitaire du produit à assembler et, d'autre part, un positionnement très précis (souvent mieux que le dixième de mm), à cause des faibles dimensions des pièces à assembler.

A cette fin, selon l'invention, l'automate rapide et précis pour le déplacement alternatif d'un organe actif entre, d'une part, une position quelconque choisie parmi une pluralité de positions possibles d'une première zone et, d'autre part, une position quelconque choisie parmi une pluralité de positions possibles d'une seconde zone, distante de la première, est remarquable en ce qu'il comporte des moyens de déplacement à course fixe entre un point déterminé de l'une desdites zones et un point déterminé de l'autre desdites zones, ainsi que des moyens de déplacement précis, associés aux moyens de déplacement à course fixe et asservis en position pour faire effectuer audit organe actif, pendant le déplacement à course fixe, le court trajet qui séparerait les positions choisies de la première et de la seconde zones, si ces zones, à la suite du déplacement à grande vitesse avaient été amenées en superposition de façon que leurs points déterminés soient superposés.

Ainsi, le déplacement rapide à grande course fixe est dissocié du déplacement précis à petite course variable et asservie, mais celui-ci s'effectue pendant le premier, de sorte que les cycles de fonctionnement peuvent être raccourcis et que la précision de positionnement est excellente.

De préférence, l'asservissement des moyens de déplacement précis est effectué à l'aide de valeurs de consignes constituées par la moyenne des valeurs de paramètres de positions réellement atteintes au cours de cycles identiques antérieurs. Ainsi, on évite toute dérive.

Les figures du dessin annexé feront bien comprendre comment l'invention peut être réalisée.

Les figures 1 et 2 illustrent schématiquement, à propos d'un exemple de mise en oeuvre, le fonctionnement de l'automate selon l'invention.

La figure 3 montre un exemple de réalisation de l'automate destiné à réaliser l'exemple de mise en oeuvre des figures 1 et 2.

Les figures 4a, 4b et 4c sont des diagrammes de phase des différents actionneurs de l'automate de la figure 3.

La figure 5 illustre schématiquement un autre automate selon l'invention, destiné à une autre application.

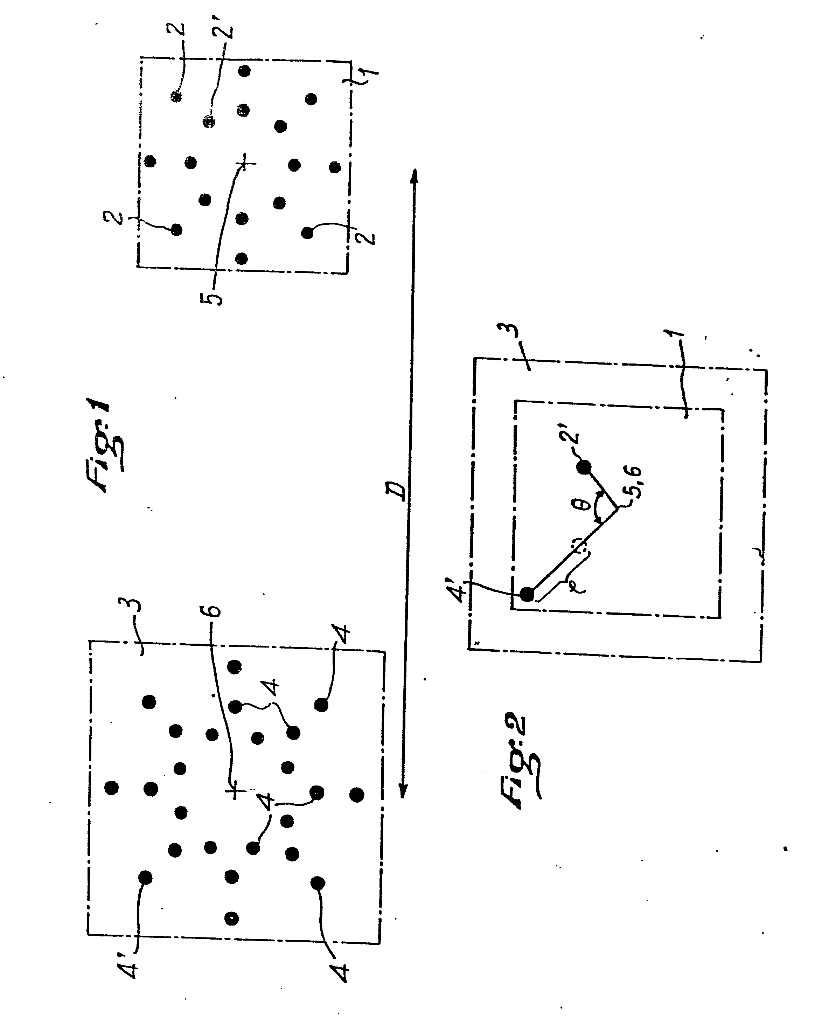

Sur la figure 1, on a représenté une zone 1 de préhension de pièces, comportant une pluralité d'emplacements de préhension 2, ainsi qu'une zone 3 d'assemblage de pièces, comportant une pluralité d'emplacements d'assemblage 4. Les centres respectifs 5 et 6 des zones 1 et 3 sont distants de D.

Pour illustrer, l'invention, on suppose qu'une pièce doit être prélevée par l'organe actif de l'automate à l'emplacement de préhension 2' de la zone 1, pour être assemblée à d'autres pièces à l'emplacement d'assemblage 4' de la zone 3.

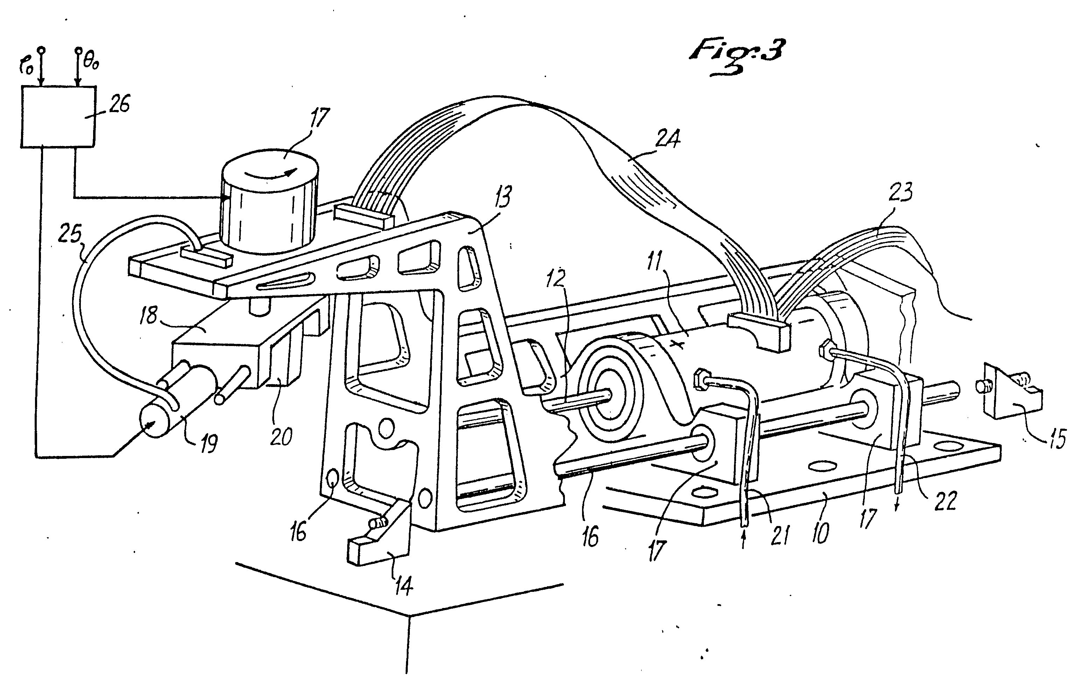

Pour cela, selon l'invention, on prévoit des moyens de déplacement à grande vitesse susceptibles de faire effectuer au support de l'organe actif une translation rectiligne d'amplitude D. Dans cette translation, tout se passe comme si la zone de préhension 1 avait été amenée en superposition sur la zone d'assemblage 3, de façon que les centres 5 et 6 soient superposés, comme le montre la figure 2. Dans l'exemple décrit, outre la translation D, pour passer de la position 2' à la position 4', il est nécessaire de faire effectuer à l'organe actif une rotation d'amplitude $\theta$ et un déplacement radial d'amplitude $\ell$ .

Selon l'invention, le passage de l'organe actif de la position 2' à la position 4' s'effectue par la superposition de la translation D à grande vitesse, de la rotation précise $\theta$ et de la translation radiale précise, $\ell$ , la rotation précise $\theta$ et la translation radiale précise $\ell$ étant asservies et réalisées pendant la translation D à grande vitesse.

Ainsi, dans l'automate selon l'invention, les fonctions "déplacement à grande vitesse sur une course éventuellement grande" et "positionnement précis pour des déplacements limités" sont effectués séparément, par des moyens indépendants et possédant des caractéristiques propres difficilement compatibles lorsqu'on les exige du même moyen.

Bien entendu, quoique dans l'exemple des figures 1 et 2 on ait supposé que le déplacement à grande vitesse était effectué par une translation rectiligne, il va de soi que ce déplacement pourrait être obtenu par tout autre mouvement, comme par exemple circulaire. Il en est de même du déplacement précis qui peut être réalisé par tout mouvement, autre que celui résultant d'une rotation et d'une translation.

Le déplacement à grande vitesse est par exemple programmé (en boucle ouverte) et il peut assurer un positionnement grossier, par exemple à 0,5 mm près,. En revanche, le déplacement précis est asservi (en boucle fermée) de façon mécanique, optique, hydraulique, piézoélectrique, etc... (non représentée).

Pour la réalisation du déplacement à grande vitesse, on peut utiliser un vérin de type connu à grande course de valeur fixe, commandé par tout ou rien. Pour la réalisation du positionnement précis, on utilise de préférence des actionneurs asservis légers à courses courtes.

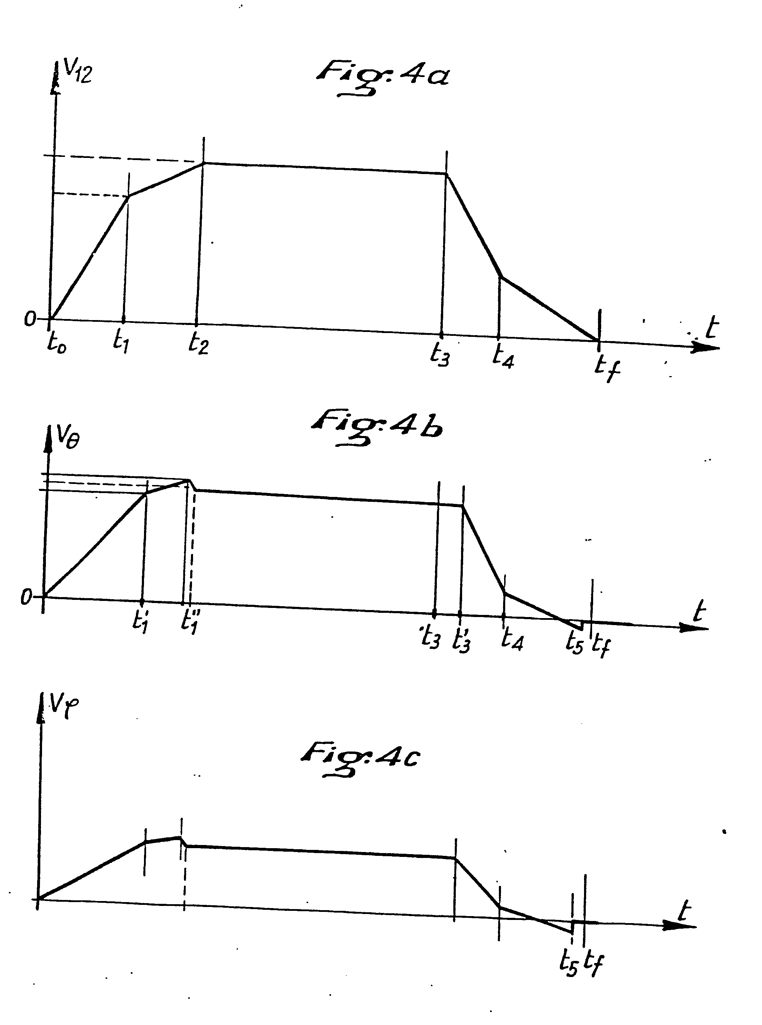

L'automate selon l'invention, représenté partiellement sur la figure 3, comporte un bâti 10 sur lequel est fixé un vérin hydraulique rapide 11. La tige 12 du vérin 11 est solidaire d'un chariot 13 pouvant coulisser entre une butée avant 14 et une butée arrière 15, grâce à deux tiges parallèles 16 solidaires dudit chariot , et passant dans des paliers de glissement 17 solidaires du bâti 1.La course du chariot 13 entre les butées 14 et 15 correspond à la course D de la figure 1.

A une extrémité du chariot 13 est prévu un vérin rotatif précis 17 destiné à faire tourner un équipage 18 par rapport audit chariot. Le vérin rotatif 17 fourni le déplacement angulaire θ de la figure 2.

De plus, sur l'équipage rotatif 18 est monté un vérin précis 19 destiné à actionner l'organe actif 20 en coulissement (par exemple un organe de préhension) selon le trajet radial $\ell$ de la figure 2.

Les différents vérins sont reliés par des liaisons appropriées 21 à 25 à des sources de courant électrique ou de fluide sous pression. De plus, un dispositif d'asservissement 26, asservit le vérin rotatif 17 à une valeur de consigne $\theta_o$ et le vérin 19 à une valeur de consigne $\ell_o$. Les consignes $\theta_o$ et $\ell_o$ sont soit programmées , soit indiquées par "apprentissage", soit encore résultent du moyennage d'une pluralité de valeurs de dépose $\theta$ et $\ell$ antérieures.

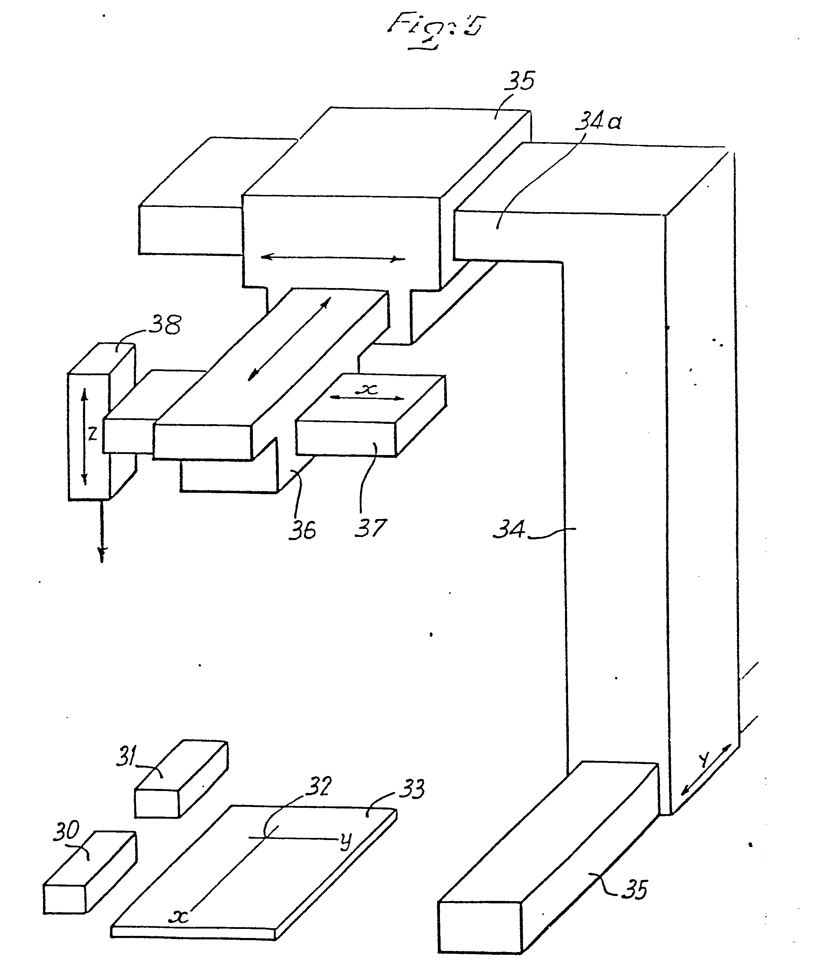

Les diagrammes 4a à 4c illustrent le fonctionnement du dispositif de la figure 2 en fonction du temps $\underline{t}$ . A l'instant $t_o$, alors que l'on se trouve à l'aplomb de la position 2', les vérins 11, 17 et 19 sont actionnés simultanément, si bien que la vitesse $V_{12}$ de la tige 12 (course D) croît à partir de zéro entre $t_o$ et $t_1$ et entre $t_1$ et $t_2$, puis est constante de $t_2$ à $t_3$, pour décroître rapidement de $t_3$ à $t_4$, puis moins rapidement jusqu'à O de $t_4$ à $t_f$, $t_f$ étant l'instant auquel l'organe 20 doit se trouver à l'aplomb de la position 4' (voir la figure 4a). Au temps $t_f$, la tige 12 et donc le chariot 13 ont parcouru la distance D.

Comme le montrent les diagrammes de la figure 4b (vitesse de rotation $V_\theta$ de l'équipage mobile 18) et de la figure 4 (vitesse de déplacement $V_\ell$ de l'organe 20) , l'actionnement des vérins 17 et 19 débute également à l'instant $t_o$ pour se terminer à un instant $t_5$ antérieur à $t_f$. On voit donc que le positionnement précis de l'organe 20, est asservi pendant le déplacement de grande vitesse et de grande course de la tige 12 et est terminé avant la fin de ce déplacement. Ainsi, le positionnement précis de l'organe 20 peut être obtenu avant l'arrivée du chariot 13 sur la butée 14.

Bien entendu, le mouvement de retour, de la butée 14
à la butée 15, peut s'effectuer de manière analogue.

On conçoit donc aisément que la position de l'organe 10
soit programmable de sorte que les points de départ ou
d'arrivée 2 ou d'arrivée ou de départ 4 puissent
être choisis en fonction des exigences de production.

Comme mentionné ci-dessus, pour compenser d'éventuelles
dérives, on peut auto-adapter les consignes $\theta_o$ et $\ell_o$
au cours de cycles successifs identiques par moyennage
des dernières positions réellement obtenues.

La présente invention n'est pas limitée à l'exemple de
réalisation décrite en regard des figures 1 à 4. La
figure 5 illustre un autre exemple de réalisation destiné
à prélever des pièces alternativement dans deux magasins
30 et 31, pour les assembler au point 32 d'une platine
de montage 33. Cette réalisation comporte un portique
34, pouvant coulisser horizontalement d'un déplacement
rapide à course fixe, le long d'un dispositif de guidage
35. Le portique 34 porte sur une branche horizontale 34a,
un chariot rapide à course horizontale fixe 35, de
direction de coulissement orthogonale à celle du portique. Sur le chariot 35 est monté un chariot 36
à déplacement précis et programmé de direction horizontale
orthogonale à celle du chariot 35, et sur le chariot 36
est monté un chariot 37 à déplacement précis et programmé
de direction horizontale orthogonale à celle du chariot
36. Enfin, sur le chariot 37 est monté un chariot 38,
mobile verticalement et portant l'organe de préhension.

Quoique les exemples précédents, on ait indiqué que les
moyens asservis en position étaient montés sur les moyens
à course fixe, il va de soi que l'on pourrait obtenir le résultat de l'invention en montant les moyens à course
fixe sur un support ou une embase asservi en position.

R E V E N D I C A T I O N S

1.- Automate rapide et précis pour le déplacement alternatif d'un organe actif (20) entre, d'une part, une position quelconque (2') choisie parmi une pluralité de positions possibles (2) d'une première zone (1) , et, d'autre part, une position quelconque (4') choisie parmi une pluralité de positions possibles (4) d'une seconde zone (3), distante de la première, caractérisé en ce qu'il comporte des moyens de déplacement à course fixe (11,12) entre un point déterminé (5) de l'une desdites zones et un point déterminé (6) de l'autre desdites zones, ainsi que des moyens de déplacement précis (17,19), associés aux moyens de déplacement à course fixe (11,12) et asservis en position pour faire effectuer audit organe actif (20) , pendant le déplacement à course fixe, le court trajet qui séparerait les positions choisies (2' et 4') de la première et de la seconde zones, si ces zones, à la suite du déplacement à course fixe, avaient été amenées en superposition de façon que leurs points déterminés (5,6) soient superposés.

2.- Automate selon la revendication 1, caractérisé en ce que l'asservissement des moyens de déplacement précis est effectué à l'aide de valeurs de consignes $\theta_o$ , $\ell_o$ constituées par la moyenne de valeurs de paramètres de position réellement atteintes au cours de cycles identiques antérieurs.

Fig.1

Fig.2

Fig.3

$r_0$ $\theta_0$

26

17

24

25

13

23

18

12

11

20

19

16

14

16

17

21

10

17

22

15

0021972

Fig. 4a

Fig. 4b

Fig. 4c

Fig: 5

0021972

**Office européen des brevets**

## RAPPORT DE RECHERCHE EUROPEENNE

Numéro de la demande

EP 80 40 0873

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | B 23 P 19/00// B 25 J 9/00 |
| | US - A - 3 306 471 (DEVOL) <br><br> * colonne 4, lignes 68-75; colonne 5, lignes 1-9; colonne 37, lignes 4-75; colonne 38, lignes 1-25; figures 1 et 1a * <br> --- | | |
| A | GB - A - 2 009 353 (SCHLATTER) | | |
| A | FR - A - 1 365 562 (FESTO) | | |
| | --------- | | |

**DOMAINES TECHNIQUES RECHERCHES (Int. Cl. 3)**

B 23 P
B 25 J
H 05 K

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15 septembre 1980 | BERGHMANS |

OEB Form 1503.1  06.78